(19) Europäisches Patentamt
European Patent Office
Office européen des brevets

(11) **EP 2 063 392 A1**

(12) **EUROPEAN PATENT APPLICATION**

(43) Date of publication:
**27.05.2009 Bulletin 2009/22**

(51) Int Cl.:
***G06T 5/50*** (2006.01)

(21) Application number: **07121471.2**

(22) Date of filing: **24.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Barco NV**
**8500 Kortrijk (BE)**

(72) Inventors:
• **Kimpe, Tom**
  **9000 Gent (BE)**

• **Woestenborghs, Wouter**
  **9000 Gent (BE)**
• **Marchessoux, Cédric**
  **59650 Villeneuve d'Ascq (FR)**

(74) Representative: **Hertoghe, Kris Angèle Louisa et al**
**Bird Goen & Co,**
**Klein Dalenstraat 42A**
**3020 Winksele (BE)**

(54) **Image processing of medical images**

(57)     An image processing method and system are described for processing medical images. The method comprises using a new coordinate system for representing combined image data of said plurality of medical images based on correlation information between image data of a plurality of medical images. The method further may comprise extracting such correlation information, and after said representing, mapping obtained image data to an antagonist colour space, thus resulting in visualisation with a fused image with high contrast and luminance and with particular human vision parameters relating to equalities and differences in the plurality of medical images studied.

FIG. 1a

100

Obtaining different medical images of an object

Registering the medical images
112
110

Using a new coordinate system based on correlation information between image data of the plurality of medical images
130

Perform coordinate transformation from intermediate coordinate system to new coordinate system
140

Map combined image data in new coordinate system to antagonist colour space
150

Transform image data in antagonist colour space to X, Y, Z values
160

Transform X, Y, Z values to R, G, B values
170

FIG. 1b

**Description**

**Field of the invention**

The present invention relates to the field of medical imaging. More particularly, the present invention relates to the field of image processing and visualisation of multiple medical data sets simultaneously, more particularly to methods and systems for fusing multiple medical data sets simultaneously.

**Background of the invention**

In order to positively evolve to accurate medical diagnoses, at present often complementary information obtained from different sources are compared. For example positron emission tomography (PET) and computed tomography (CT) often are used in combination as they provide different information that hardly is correlated, resulting in additional useful information being present, e.g. for the radiologist, and thus resulting in a better overall picture of the subject under study. Alternatively or in addition thereto, comparison of different images obtained using the same technique, e.g. computed tomography, at different periods in time also may allow obtaining information regarding the evolution of an object, which also may be used for diagnoses.

Placing different medical images aside each other to evaluate objects often results in inaccuracy as it can be difficult to see variations or differences in images that are not in overlay e.g. due to inaccuracy of localizing a feature in different images of the same object. Fusion of such medical images to single images would allow a better evaluation and facilitate diagnosis fusion of functional and anatomical medical images as the functional images often suffer from bad resolution. As far as known, such fusion is not done yet for images recorded with the same technique, e.g. time evolution of an object on CT images. Currently such images are routinely read side by side or individually.

Fusion of positron emission tomography and computed tomography images is currently done by fusing CT and PET images according to a particular fusion algorithm. The image information received from making a PET or CT scan typically is a file containing a value for each pixel in the image. Such images can be easily represented in grayscale. Visualisation of a single image, e.g. a CT image, therefore can be obtained by mapping the image data, e.g. one component or one channel, on the red (R), green (G) and blue (B) channel of each pixel, which for an image with a bit resolution of the image "resolution" and for an 8-bit monitor this results for example in the following mapping :

$$\begin{bmatrix} R \\ G \\ B \end{bmatrix} = \begin{bmatrix} \dfrac{CT}{resolution} 255 \\ \dfrac{CT}{resolution} 255 \\ \dfrac{CT}{resolution} 255 \end{bmatrix} \qquad\qquad [1]$$

More particularly, currently when joining PET-CT images, one of the images, e.g. the CT image, is mapped to the R, G and B channel using values between [0,"max"]. One of the images thus is mapped on the luminance, for each colour channel equally, but only for part of the dynamic range, e.g. half of the dynamic range. The PET images will be mapped using a certain colour map using values between [0,(255-max)] in addition to the CT R, G and B value of that pixel. The luminance/colour resolution of the CT image thus drops from 255 to "max" while the luminance/colour resolution of the PET image drops too. The downside of the above combination scheme therefore is that the two images will lose resolution. The max value is variable so the user can choose how much (s)he wants to blend in the PET. The latter results in a loss of grayscale resolution, a low contrast and a low luminance. The number of bits available thereby also plays a role : whereas at present this is typically 8 bits, in future operation with 10bit or higher also should be possible. Furthermore, fusion of PET and CT images involves a large number of controls and changing of the fusion parameter asks for adoption of the window leveling. More particularly, when the fusion parameter is changed, i.e. the amount that the PET image is blended into the CT image, automatically the luminance of the CT images changes as well. The latter will probably lead to the radiologist redoing the window-leveling to again achieve his favorite luminance/contrast settings.

From Baum et al in Journal of Digital Imaging it is known to map two images to the a different colour space such as for example CIE XYZ, CIE L*a*b*, HSV and HSL. The resulting colour image can then be converted to the RGB colour space for display. For example, if registered PET, CT and MRI images are available, MRI can be used as the luminance, CT as the saturation and PET as the hue. Other techniques suggested by Baum et al. are the use of overlay and the use of interlacing. The last one has the disadvantage of reducing the spatial resolution, whereas, as described above, the overlay solution has the disadvantage of reducing the contrast and luminance of the images.

## Summary of the invention

It is an object of the present invention to provide good methods and systems for processing medical images. It is an advantage of embodiments according to the present invention that methods and systems for fusing image information are provided, thus visualising image information of a plurality of medical images. It is an advantage of embodiments according to the present invention that methods and system are provided resulting in images with higher contrast, e.g. by mapping information directly to coordinates corresponding with sensitive components of the human vision system. Furthermore, it is an advantage of embodiments according to the present invention that the fusion and/or mapping processing provided corresponds to the way of how the human visual system (HVS) decomposes the image in the brain in an opponent colour space, the methods and systems thus mimicking the human vision system. Methods and systems according to embodiments of the present invention thus have the advantage to modify the data to have a good, optionally the best possible, response from the human eye.

It is an advantage of embodiments according to methods and systems of the present invention that there is a large independence in the different image channels. It is an advantage of embodiments according to the present invention that changing parameters of visualisation will not change the perception of the other image channels, which solves the problem that currently frequently occurs in fusion visualisation of positron emission tomography and computed tomography image data whereby modifying or enhancing the positron emission tomography image automatically reduces the luminance of the computed tomography part of the image.

It is an advantage of embodiments according to the present invention that optimal use of the available resolution can be made by mixing the information through use of a colour space transformation. It is an advantage of embodiments of the present invention that split up of R, G or B channels for mapping different sets of information is avoided.

The method according to the present invention allows at least partly mimicking the human observer by decomposing the image into three components as is done in the brain. The above objective is accomplished by a method and device according to the present invention.

The invention relates to a method for processing medical images, the method comprising using a new coordinate system for representing combined image data of said plurality of medical images based on correlation information from image data of a plurality of medical images. It is an advantage of embodiments according to the present invention that a method is provided for visualising correlation in medical images, e.g. medical sub-images. The latter may allow a better interpretation of the medical images. Embodiments of the present invention thus may assist in better diagnostic processes.

The method may comprise extracting said correlation information from image data of a plurality of medical images and generating said new coordinate system based thereon.

The processing of medical images may comprise fusion of medical images. It is an advantage of embodiments according to the present invention that the provided methods and systems are especially suitable for obtaining accurate and useful fused medical images.

The method may comprise obtaining a plurality of medical images. It is an advantage of embodiments according to the present invention that different images can be visualised in a single image. Obtaining the plurality of medical images may be receiving the plurality of medical images from an internal or external source or memory. Alternatively or in addition thereto, obtaining furthermore may comprise acquiring such images of an animal or human being.

Obtaining may comprise registering the plurality of medical images on top of each other. The registering may be spatially localising image data of the plurality of medical images on top of each other. The localising may comprise making sure that image features are always present at the same location in the multiple medical images. For example, when registering two liver CT datasets, selecting the datasets so that every pixel of the liver is on exactly the same location in each of the two registered resulting images. Alternatively registering can mean making sure that one or more fixed features are present at the same position in the multiple medical images, for example fixing the left ventricle of the heart at a fixed position in a multi phase heart study so that the beating of the heart is easily visible without seeing actual movements of the complete heart itself. The registering may include rescaling the multiple medical images so that they all have the same resolution.

Extracting correlation information may comprise applying principal component analysis. It is an advantage of embodiments according to the present invention that the principal component analysis technique may provide a computational efficient technique for deriving correlation information, thus assisting in an efficient technique for obtaining visualisation of a multi-dimensional medical image data in a single image, by maintaining and/or highlighting meaningful and/or crucial information.

The plurality of medical images comprising N medical images and extracting correlation information may comprise representing image data for each pixel of said N medical images in an intermediate N-dimensional coordinate system by using, for each pixel, the image value in the j-th medical image as j-th coordinate of a data set for the intermediate N-dimensional coordinate system for said pixel, and may derive correlation information from a covariance matrix for said data in said intermediate N-dimensional coordinate system. It is an advantage of embodiments according to the present invention that a method is provided that is scalable to the number of medical images to be visualised. It is an advantage of embodiments according to the present invention that a computational efficient method is obtained. Alternatively, the N images may themselves have more than 2 dimensions. The N images may for example be N 3D datasets, or N sequences of 2D images (2D+time), or the N images can be colour so each pixel of the N images already consists of 3 values, etc.

Extracting correlation information may comprise deriving eigenvectors for said covariance matrix in the intermediate coordinate system, and wherein generating a new coordinate system comprises using said eigenvectors as coordinate axis of said new coordination system, thus defining the new coordinate system. It is an advantage of embodiments according to the present invention that the processing of image data can be performed using established mathematical techniques in matrix algebra. It thereby is to be noticed that, whereas the present invention is illustrated using matrix algebra, the present invention is not limited thereto and may be formulated in any suitable mathematical formalism such as for example but not limited to vector calculus.

The method further may comprise performing a transformation of the represented image data points in the intermediate coordinate system to the new coordinate system. Alternatively, if one calculates the coordinates in a non-linear way, calculating a new axis system may be avoided. It thus is advantageous to determine a new coordinate system when using a fixed axis system or when using PCA to determine the new axis system. The corresponding transformation thus advantageously is performed when using a fixed axis system or when using PCA. It is an advantage of embodiments according to the present invention that different images can be visualised in a single image, without loosing too much relevant information. It is an advantage of embodiments according to the present invention that by using the correlation information focus may be put on differences and points of agreement.

The plurality of medical images may consist of N medical images, the number of medical images N being at least 2 and less than 6. It is an advantage of embodiments according to the present invention that the method can be used for combining more than two images, i.e. that it is up-scalable to larger number of images. It is an advantage that methods and systems according to embodiments of the present invention can be easily adapted to the number of images to be combined, based on conventional mathematical principles. The method may be performed using a moving window approach. For example if a large number of images is to be used, the method can be applied to a first set of images on which the processing is done which is user selected, e.g. which comprises a smaller number of images adjacent to the image of interest.

The medical images may comprise at least one positron emission tomography image and at least one computed tomography image. It is an advantage of embodiments according to the present invention that methods and systems according to embodiments of the present invention may allow combination of medical images of different type. It is an advantage of embodiments according to the present invention that such information of different types of images can be combined in a single image, without significantly loss of information required for interpreting images, and optionally making diagnostic decisions.

The medical images may comprise different phases of a computed tomography scan. It is an advantage of embodiments according to the present invention that methods and systems are provided that assist in visualising medical images recorded at different times, thus assisting in visualising and optionally evaluating evolution of an object.

The method furthermore may comprise mapping image data of the plurality of medical images in an antagonist colour space. The antagonist colour space may comprise a separate luminance component. It furthermore may comprise a plurality of colour contrast components. The antagonist colour space also may be referred to as colour opponent colour space. It is an advantage of embodiments according to the present invention that methods and systems are provided generating fused medical images that result in a medical relevant image. It is an advantage of embodiments according to the present invention that methods and systems are provided which allow maintaining high contrast and good resolution, in contrast to some known techniques. It is an advantage of embodiments according to the present invention that methods and systems are provided resulting in a fused image with good luminance.

Mapping image data of the plurality of medical images in an antagonist colour space may comprise mapping image data of the plurality of medical images in the L*, a*, b* colour space. It is an advantage of embodiments according to the present invention that use can be made of a known colour space, which can be easily integrated in imaging and processing systems.

First image data may be mapped to a luminance component of the antagonist colour space, whereas second image data may be mapped to other components of the colour space. It is an advantage of embodiments according to the present invention that a good contrast can be obtained. It is an advantage of embodiments according to the present invention that different images can be mapped on different colour coordinates appropriately corresponding with the way the human visual system perceives the data.

The method may comprise transforming image data in the antagonist colour space to a different colour representation taking into account the white point of the display, for visualising the image data on a display. Different colour representations may for example be RGB, CMYK, etc. Transformation may be performed using for example CIE transformation. It is an advantage of embodiments according to the present invention that the visualised image data can be represented in true colour images. The latter is obtained by taking into account the white point of the display used for visualisation.

Mapping image data of the plurality of medical images in an antagonist colour space coordinate may comprise mapping the combined image data from the new coordinate system to the antagonist colour space.

A luminance component of the colour space may be used for imaging the image data that is the same for the plurality of medical images, whereas at least one colour contrast component of the colour space is used for representing differences between imaged data in different medical images. It is an advantage of embodiments according to the present invention that methods and systems are provided allowing to optimally use the different coordinates of the colour space for visualising differences and correspondence between different images of the plurality of medical images.

The present invention also relates to an image processing system for processing medical images, the system adapted for using a new coordinate system for representing combined information of said plurality of medical images based on correlation information from image data of a plurality of medical images. The image processing system may comprise an extraction means for extracting the correlation information from image data of a plurality of medical images, and a generation means for generating said new coordinate system based on said extracted correlation information.

The system further may comprise a transformation means for transforming image data of the plurality of medical images to the new coordinate system.

The system further may comprise a mapping means for mapping image data of the plurality of medical images from the new coordinate system to the a colour space having a separate luminance coordinate.

The system may comprise the functionality of performing a method for image processing as described above.

The present invention also relates to a medical imaging system adapted for recording a plurality of medical images, the medical imaging system comprising an image processing system as described above.

The present invention also relates to a computer program product adapted for, when executed on a computing device, performing a method for processing medical images as described above.

The present invention furthermore relates to a machine readable data storage device storing the computer program product as described above and/or the transmission of such a computer program product over a local or wide area telecommunications network.

The present invention also relates to digital or analog images produced using a method for processing medical images as described above.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

FIG. 1a and FIG. 1b are flow charts of exemplary methods for processing a plurality of medical images according to an embodiment of the first aspect of the present invention, the first exemplary method using PCA, the second method using fixed axes.

FIG. 2 is a schematic representation of an image processing system according to an embodiment of the second aspect of the present invention.

FIG. 3 is a schematic representation of a processor programmed as image processor according to an embodiment of the second aspect of the present invention.

FIG. 4 is a representation of image data of the plurality of medical images in an intermediate coordinate system, as can be used in embodiments according to the first aspect of the present invention.

FIG. 5 is a representation of three different medical CT images of the object recorded in different conditions, as can be used in embodiments according to the first aspect of the present invention.

FIG. 6 illustrates an example of the regression for the images shown in Fig. 5, mapped on the luminance, as can be obtained in embodiments according to the first aspect of the present invention.

FIG. 7a and FIG. 7b illustrates two examples of fused images as can be obtained in embodiments according to the first aspect of the present invention.

FIG. 8 to FIG. 11 shows colour maps in the L*a*b* colour space, as can be obtained in embodiments according to the first aspect of the present invention.

FIG. 12 illustrates an example of a system where PET value 0 appears and whereby boost of luminance is provided, as may be done using a method according to an embodiment of the present invention.

FIG. 13 to FIG. 16 represent the original and boosted luminance for a plurality of colour maps, as can be obtained using a method according to an embodiment of the present invention.

FIG. 17 to FIG. 19 represent alternative colour maps as can be obtained using a method according to an embodiment of the present invention.

FIG. 20 illustrates the use of a colour contrast coordinate to map the PET image while the luminance varies from 10 to 90.

**Detailed description**

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

The following terms or definitions are provided solely to aid in the understanding of the invention. These definitions should not be construed to have a scope less than understood by a person of ordinary skill in the art.

Where in the present application reference is made to a "medical image", reference may be made to a computed tomography (CT) image, a functional magnetic resonance image (MRI), an anatomic magnetic resonance image (MRI), a positron emission tomography (PET) image, a single photon emission computer tomography (SPECT) image, ultrasound images, dual source CT images, dual energy CT images, tomosynthesis images, etc.

Where in the present application reference is made to an image or image data, reference is made to a digital or analogue image or to digital or analogue image data, which may be a set of data corresponding with pixel data for an image.

In a first aspect, the present invention relates to a method for processing medical images. Such a method may be a computer-based method, wherein the processing is performed using a processor or processing means for example according to a predetermined algorithm, based on a neural network or according to predetermined rules. The method may be performed in an automated and/or automatic way. The method for processing medical images is especially suitable for generating or assisting in generating of visualisations of different medical images in a single image. In other words, the method is especially suitable for fusion of medical images, e.g. images obtained with a different technique but with a high degree of correlation between the images or advantageously images obtained with the same technique, e.g. expressing a time evolution of an object. The latter may for example be used in imaging applications and diagnostic applications in the medical field. The object under study may be any object of interest. In some embodiments according to the present invention the object of interest is a human being or part thereof or an animal or part thereof.

In embodiments according to the first aspect of the present invention, the method for processing medical images comprises using a new coordinate system for representing combined image data of the medical images based on correlation information from image data of a plurality of medical images. Such coordination system may for example be obtained by extracting correlation information from image data of a plurality of medical images and generating such a new coordinate system based on correlation information. Alternatively, a predetermined, fixed, coordinate system could be used taking into account correlation information, e.g. an assumed correlation, between the plurality of medical images. For example, a stored coordinate system wherein the axes have been calculated once can be used. The step of calculating the axes thus may not be done for every image. Alternatively or in addition thereto, fixed axes could further be selected based on image type, study type, acquisition device type, exact combination of image types, ... For images from medical imaging techniques where the actual grey values have a physical meaning, e.g. in CT images where absorption of object is imaged, and are related to characteristic of the tissue/body parts, a technique using fixed axes, e.g. predetermined axes, may be advantageous. When visualising e.g. two CT datasets simultaneously, it thus is possible to pre-calculate the axes once (per type of study such as liver, heart, bone, lung, ...) and thereafter always use these axis. This has the additional advantage that visualisation does not depend on the image contents anymore and thus, for example CT/CT lung studies will look the same. It is to be noticed that other medical imaging techniques, such as e.g. MRI images, do not have a standardized pixel output and therefore it will be always necessary for recalculating the axes system, at least when a different type of MRI scanner is used or when the MRI scanner settings are different. A transformation to the new coordinate system may be a linear transformation, such as for example PCA or regression. The transformation used may also be a non-linear transformation.

Using the new coordinate system, appropriate fusion, i.e. visualisation of the plurality of medical images in a single image can be obtained. It is an advantage of embodiments of the present invention that such fused images may result in a visualisation that can be medically relevant. The use of the new coordinate system according to embodiments of the present invention may be pre-processing of data in a fusion process. It may be followed by a mapping of the image data to an antagonist colour space, also referred to as colour opponent colour space. Such a colour space may have a separate component for expressing luminance. It furthermore may have, e.g. two, components for expressing colour contrast information. One example of an antagonist colour space, the present invention not being limited thereto, is the L*a*b* colour space wherein L is the luminance indicating a grayscale contrast, a indicates a red/green contrast and b indicates a blue/yellow contrast. The mapping of image data thus may be mapped not directly on the R,G,B channels of a pixel, but may be mapped on the antagonist colour space, optionally taking into account the white point and then transformed to RGB values. The image channels thus may be mapped on axes that better correspond to the way the human visual system will perceive the data. The white point can be taken into account when going from the XYZ to the RGB space. So, for the values mapped e.g. in the L*a*b* space, one may first calculate the values of each point in XYZ and then transform to RGB. In this last transformation, one can include the white point.

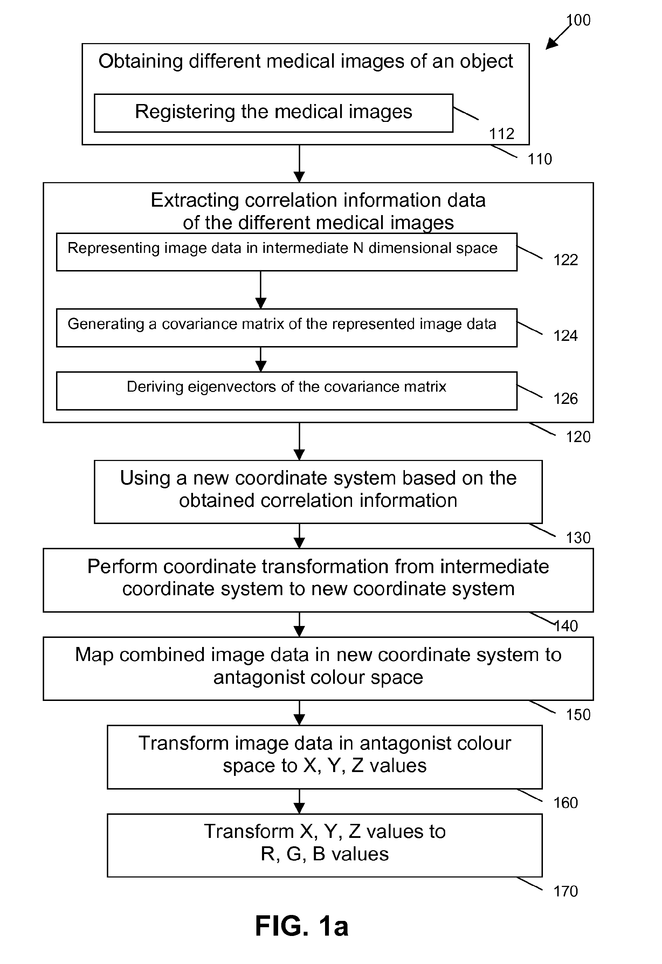

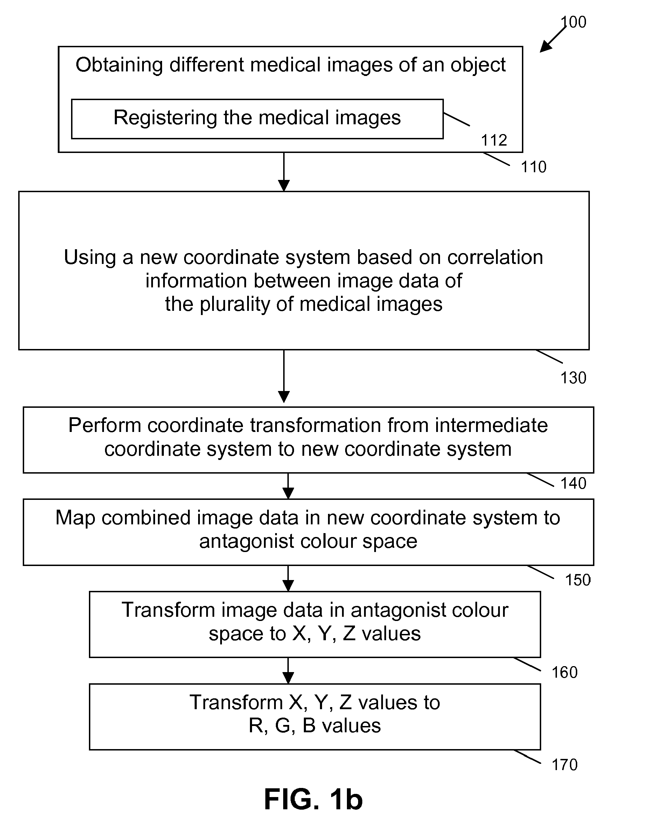

By way of illustration, the present invention not being limited thereto, an example of a method according to an embodiment of the present invention is provided in the flow chart of FIG. 1a and FIG. 1b, showing standard and optional steps of the method for processing medical images. The present example is related to combination of different phases of CT studies, the invention not being limited thereto.

In an optional first step 110, the method for processing 100 comprises obtaining different medical images of an object. These may be different medical images of an object obtained with different techniques, whereby advantageously there is significant correlation between the images, or, advantageously, this may be different medical images obtained with the same technique, but e.g. at different condition, e.g. different moments in time, taken with or without image assisting agent, e.g. contrast fluid. Obtaining the images may for example be receiving the images from an external memory where these have been stored. Alternatively the images may be received from a recording medium, e.g. a scanner. Another alternative is that the images to be processed are already present in the processing system. Obtaining the images may comprise a step of registering 112 medical images as shown in FIG. 1a and FIG. 1b. Registering the medical images may comprise spatially localizing image data of the plurality of medical images on top of each other. The localizing may comprise making sure that image features are always present at the same location in the multiple medical images. For example, when registering two liver CT datasets, selecting the datasets so that every pixel of the liver is on exactly the same location in each of the two registered resulting images. Alternatively registering can mean making sure that one or more fixed features are present at the same position in the multiple medical images, for example fixing the left ventricle of the heart at a fixed position in a multi phase heart study so that the beating of the heart is easily visible without seeing actual movements of the complete heart itself. The registering may include rescaling the multiple medical images so that they all have the same resolution.

In an optional second step 120, the method for processing comprises extracting correlation information from image data of the different medical images. Such correlation information may be advantageously be present in images recorded with the same technique, the method not being limited thereto. Extracting correlation information from image data may be performed in a plurality of ways such as for example using principal component analysis (PCA) or using regression analysis the invention not being limited thereto. Other examples of techniques that may be used are for example independent component analysis (ICA), non-linear principal component analysis, MISEP, INFOMAX, mutual information. By way of illustration the present invention not being limited thereto, other or more particular information on such techniques is described in "Linear and nonlinear ICA based on mutual information : the MISEP method, signal processing archive", 84, 231 - 245 (2004) (ISSN 0165-1684).

By way of illustration, the method not being limited thereto, application of PCA and corresponding different steps for the extraction of correlation information are described.

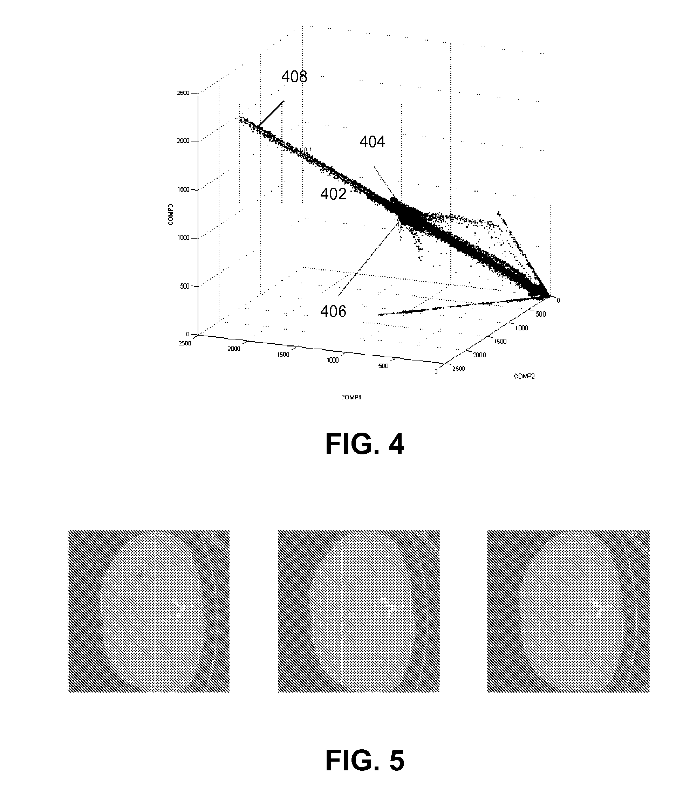

In a first sub-step 122, the values for corresponding pixels in the plurality of medical images, comprising N medical images, can be used as components of coordinates in an intermediate N dimensional space. In this way, for each pixel information of the different medical images is combined, resulting in a single point in an intermediate N dimensional space. The latter will be illustrated for an example with three medical images in the first particular example, as shown in FIG. 4. It also is possible that some or all of the N medical images already have a dimensionality that is higher than 1, resulting in an intermediate space having a dimensionality larger than N.

In a second sub-step 124, generation of a covariance matrix "Cov" of the obtained data in the intermediate N dimensional space is performed. Calculation of covariance matrices is known from statistics and probability theory. In one embodiment, the correlation matrix may be determined for one set of images and averaged over several slices to get a more stable PCA axis system. It expresses a measure of how much (pairs of) random variables vary together.

In a third sub-step 126, the eigenvectors of the N-dimensional matrix are determined. These eigenvectors represent the directions of the PCA axis system. The latter will be illustrated for the example of three medical images in the first particular example by the directions 402, 404 and 406 in FIG. 4. Determination of eigenvectors is well known from basic vector calculus. Eigenvectors are those vectors $\bar{x}$ that fulfill the requirement $A.\bar{x} = \lambda \bar{x}$, with A being the matrix for which the eigenvectors are determined, in the present case the N-dimensional covariance matrix and $\lambda$ being the eigenvalue. In this way N eigenvectors for the N-dimensional covariance matrix can be obtained. In the present example, these eigenvectors will be comprised in the correlation information extracted from the different medical images.

Alternatively, correlation information may comprise an assumed correlation between medical images, e.g. based on previous studies performed, libraries, stored experiments, stored image information, etc. In a further alternative, a linear or non-linear combination of the image data of the plurality of medical images can be used..

In step 130, methods for processing images according to embodiments of the present invention comprise using a new coordinate system for representing combined image data of the medical images based on correlation information between image data of the plurality of medical images. In Fig. 1a, the example is shown wherein the new coordinate system of the exemplary method is based on the eigenvectors extracted based on the covariance between the different medical images, i.e. based on the extracted correlation information. The eigenvectors thereby determine the axes of the new coordinate system. The origin of the new coordinate system may remain the origin of the original system. By changing the position of the zero of one axis with respect to another axis, one can alter the colour content if desired. Thus, by selecting a particular origin, the coordinate system can be shifted and a certain kind of offset can be created. This new coordinate system allows to express combined image data for a plurality of different medical images in an accurate way. The latter can assist in obtaining a proper visualisation on a fused image based on the different medical images.

Alternatively, using a new coordinate system based on correlation information between the medical images wherein the new coordinate system is according to predetermined axes, previously calculated, stored e.g. in libraries or previously determined in any other way, is illustrated in FIG. 1b. Obtaining a correlation between the different images may thereby be assuming a given correlation between the medical images. Still another alternative is to use a new coordinate system based on correlation information between the plurality of medical images whereby coordinates are calculated in a non-linear way. In other words, the correlation between the plurality of images may then be an imposed linear or non-linear relation, e.g. mathematical relation. It is to be noticed that in the last two alternatives, no intermediate coordinate system is required.

Using the new coordinate system based, e.g. defined by, correlation, may imply, in an optional fourth step 140, an explicit coordinate transformation of the data points to the new coordinate system, e.g. the PCA axis system or a previously stored coordinate system with fixed axes, may be performed. The latter allows that each data point in the intermediate coordinate system is expressed in the new N dimensional coordinate system indicative of correlation between the data, by a point in space in the new N dimensional coordinate system e.g. with coordinates PCA1, PCA2, ..., PCAN. It is to be noticed that the new coordinate system is not restricted to an N-dimensional coordinate system. E.g. if images of the plurality of medical images are as such already multi-dimensional, a higher dimensional coordinate system may be used.

In an optional fifth step 150, mapping of the combined image data of the plurality of medical images in the new coordinate system towards components of an antagonist colour space may be performed. The antagonist colour space, which also may be referred to as opponent colour space, may have a separate first component expressing luminance and further may have other channels for expressing colour information. In the first and second example, a mapping to an L*a*b* colour space is shown by way of illustration, the present invention not being limited to this, wherein a separate luminance component and two or more channels or components for representing colour information are provided. The first coordinate PCA1 thereby is mapped on the luminance component. If a 3 dimensional colour space is used, such a colour space is especially suitable as it corresponds to the human visual system and therefore to a certain degree can mimic the eye/brain system used for interpreting images. It thereby is advantageous that a conversion to an antagonist colour space may result in a medical relevant image. In some embodiments, the image data or image features common to the different medical images are mapped on the separate luminance component, whereas the difference between the different medical images is mapped onto the other, e.g. colour, components of the antagonist colour space. The latter may be done similar to the mapping of different types of images of different sources, as illustrated in the second particular example, whereby a single image is mapped on the separate luminance component, whereas one or more further images are mapped on colour expressing components of the antagonist colour space.

In an optional sixth step 160, the obtained image data in the antagonist colour space may be transformed to other values for representing on a display, e.g. in the case of 3-components to X,Y,Z values. The latter advantageously is performed taking into account the white point of the display on which the image information is to be displayed. An example of such a transformation is illustrated by way of example in the second particular example, and can be applied mutatis mutandis to the present method. Other transformations, not taking into account the white point of the display or taking into account the white point of the display in a different way also could be used. The transformation may be a linear colour space transformation. One example may be a transformation that is a linear approximation by using a matrix coming from spectra measurements of the display/gamut.

In an optional seventh step 170, e.g. for the case of three components, transformation of XYZ values to RGB values can be performed. If the white point of the display has been taken into account in the sixth step, such a transformation to RGB can result in true colour images. An example of such a transformation is for example is given by the CIE transformation. The latter can be expressed as follows :

$$\begin{bmatrix} R \\ G \\ B \end{bmatrix} = \begin{bmatrix} 2,3707 & -0,9001 & -0,4706 \\ -0,5139 & 1,4253 & 0,0886 \\ 0,0053 & -0,0147 & 1,0094 \end{bmatrix} . \begin{bmatrix} X \\ Y \\ Z \end{bmatrix}$$

or more generally

$$\begin{bmatrix} R \\ G \\ B \end{bmatrix} = \begin{bmatrix} x_{r,s} & y_{r,s} & z_{r,s} \\ x_{g,s} & y_{g,s} & z_{g,s} \\ x_{b,s} & y_{b,s} & z_{b,s} \end{bmatrix} . \begin{bmatrix} X \\ Y \\ Z \end{bmatrix} \qquad [2]$$

with r, g and b referring to the RGB colour space that is transformed to and s represents the system s transformed from. The matrix is the original system matrix:

$$\begin{bmatrix} X \\ Y \\ Z \end{bmatrix} = \begin{bmatrix} X_{r,s} & X_{g,s} & X_{b,s} \\ Y_{r,s} & Y_{g,s} & Y_{b,s} \\ Z_{r,s} & Z_{g,s} & Z_{b,s} \end{bmatrix} \cdot \begin{bmatrix} R \\ G \\ B \end{bmatrix} \qquad\qquad [3]$$

Based on a method according to an embodiment of the present invention, greyscale pixels may be used for representing the pixels who where the same for all input images while the colour components, e.g. red and blue, represents differences between the images. Methods and system according to embodiments of the present invention will enhance information in the luminance channel in comparison to the colour channels. This can be compensated for by spatially enhancing the colour channels. Moreover, for higher spatial frequencies, more colour information is filtered than gray information is filtered, which may also compensate for this effect. Moreover, the anisotropy could be also compensated for oriented spatial frequencies.

It is an advantage of embodiments according to the present invention that the methods allow delivering a higher contrast and making optimal use of resolution. It is an advantage of embodiments according to the present invention that a technique is provided for combining medical images with correlated information, as at present radiologists are looking at different images next to each other, making comparison and interpretation of obtained information tedious and inaccurate. Embodiments of the present invention thus may provide improvement to distinguishing small differences between the images. It is an advantage of embodiments according to the present invention that additional medical relevant information is visualized.

In a particular embodiment, the luminance component is further corrected to deal with saturation and clipping. The later may for example be performed by applying luminance boost. This may comprise for example by correcting the luminance value according to predetermined rules.

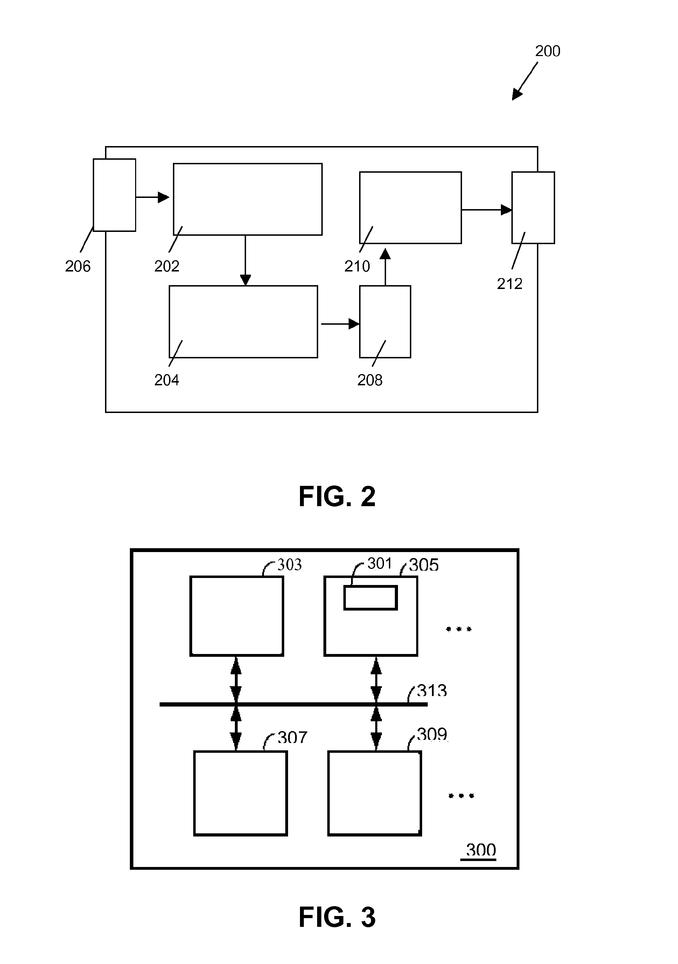

In a second aspect, the present invention relates to a system for processing medical images. The system is adapted for using a new coordinate system for representing combined image data of the plurality of medical images based on the correlation information between image data of the plurality of medical images. The processing system therefore may comprise an extractor or extraction means for extracting correlated information from a plurality of medical images and a generator or generating means for generating a new coordinate system for representing combined information of the plurality of medical images based on the correlation information. Alternatively, the extraction means may be avoided and a stored or predetermined coordinate based on correlation information, e.g. an assumed correlation, for a plurality of medical images may be used. By way of example, the present invention not being limited thereto, an example of a such a processing system is shown in FIG. 2, illustrating standard and optional components of the system. The processing system may be a computer processor whereby different functionalities are provided by different dedicated components of the computer processor, or for example by different dedicated software components, e.g. running algorithms for performing dedicated tasks. FIG. 2 illustrates the processing means 200 adapted for using a coordinate system based on correlation information between the plurality of medical images. The processing means 200 therefore may comprise a representation means for representing combined image data in the new coordinate system. The processing means 200 in a particular embodiment may comprise an extraction means 202 as described above, which may be based on or make use of principle component analysis, regression or any other technique allowing extraction of correlation information. A new coordination system generator 204 as described above also can be included. Further components, which optionally may be present, can be an input means 206 for receiving the image data for the plurality of medical images which may be received from an external memory or a medical image generator, such as for example a scanner. The input means 206 furthermore may be adapted for receiving control settings from a user, which may be used as input settings for fine tuning the processing or visualisation technique. The input means 206 than provides the extraction means 202 with the image data of the plurality of medical images. The extraction means 202 provides the extracted correlation information to the new coordinate system generator 204. The processing means 200 furthermore may comprise an image data transformation means 206 for transforming the image data to the new coordination system. Optionally the processing means may comprise a mapping means 208 for mapping the transformed image data from the new coordinate system to an antagonist colour space. Further transformation means 210 may receive the image data in the antagonist colour space from the mapping means 208 and transform the data into display coordinate data, optionally RGB data. The system furthermore may comprise an output means 212, e.g. a display system for outputting a resulting fused image or an output means for outputting the image data or information related thereto in a different way. Other components may be present in the system, such as for example, the present invention not being limited thereto, providing functionalities as described in the methods according to the first aspect of the invention. The processing means may be adapted for performing a method as described in the first aspect, e.g. according to a predetermined algorithm or e.g. based on a neural network. In one embodiment, the processing system may be a processing system as shown in Fig.

3, but programmed to implement a method as described in any of the above described method embodiments. Fig. 3 shows one configuration of processing system 300 that includes at least one programmable processor 303 coupled to a memory subsystem 305 that includes at least one form of memory, e.g., RAM, ROM, and so forth. It is to be noted that the processor 303 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. The processing system may include a storage subsystem 307 that has at least one disk drive and/or CD-ROM drive and/or DVD drive. In some implementations, a display system, a keyboard, and a pointing device may be included as part of a user interface subsystem 309 to provide for a user to manually input information. Ports for inputting and outputting data also may be included. More elements such as network connections, interfaces to various devices, and so forth, may be included, but are not illustrated in Fig. 3. The various elements of the processing system 300 may be coupled in various ways, including via a bus subsystem 313 shown in Fig. 3 for simplicity as a single bus, but will be understood to those in the art to include a system of at least one bus. The memory of the memory subsystem 305 may at some time hold part or all (in either case shown as 311) of a set of instructions that when executed on the processing system 300 implement the steps of the method embodiments described herein. Thus, while a processing system 300 such as shown in Fig. 3 is prior art, a system that includes the instructions to implement aspects of the methods for processing images is not prior art, and therefore Fig. 3 is not labelled as prior art.

In a third aspect, the present invention relates to a medical imaging system adapted for recording a plurality of medical images. The medical imaging system may be a computed tomography system, a magnetic resonance imaging system, a positron emission tomography system, a single photon emission computed tomography system, an ultrasound system etc. or a combination thereof. The system furthermore comprises an image processing system according to embodiments of the second aspect of the present invention. It is an advantage of medical imaging systems according to the present invention that medical imaging systems are provided that allow outputting processed multiple image information, e.g. fused image data based on different medical images.

In a further aspect, the present invention also relates to a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet.

It is an advantage of embodiments according to the present invention that methods and systems are provided which can accurately visualize higher dimensional images. The visualisation is improved by providing a higher contrast and a better luminance. The visualisation is improved by explicitly visualizing correlation between the different sub images.

It is an advantage of embodiments using fixed axes during the transformation of a plurality of images that early or late enhancement features in the object are shown in a consistent colour.

It is an advantage of embodiments according to the present invention that the differences between different medical images are explicitly visualised.

By way of illustration, the present invention not being limited thereto, a number of examples are provided, illustrating at least some features and advantages of embodiments of the present invention. The second example is illustrated for two medical image recorded with a different type of scanner, but these aspects can mutates mutandis be applied to different images from the same type of scanner.

## Example 1

In a first example, fusion of a plurality of computed tomography images is described. In the present example the relation between the different images is time, i.e. images of the same object are taken at different moments in time. By way of example, a multiple phase CT-CT study is used to illustrate the possibilities of useful combining, i.e. fusing, of images. In this example, a first CT scan is made without the use of contrast fluid, a second scan is taken whereby the patient was injected with contrast fluid, a third and fourth scan further show the fade out of the effect of the contrast fluid over time. The present example illustrates that contrast fluid may help the blood to absorb more of the X-ray radiation and in this way make the blood flow more visible in the CT image. Although two images are made under different circumstances and on different times, they remain highly correlated.

In the present example, the data analysis is performed using principal component analysis (PCA) and regression. First the first three phases of the study are considered. For each pixel, the three values of the different phases are used as coordinates in an intermediate coordinate system, i.e. these are the coordinates of a point in a 3D space, as shown in FIG. 4. In order to perform the principal component analysis, according to the present example first the covariance matris of the 3D data points is calculated, i.e.

$$C = \begin{pmatrix} Cov(ph1, ph1) & Cov(ph1, ph2) & Cov(ph1, ph3) \\ Cov(ph2, ph1) & Cov(ph2, ph2) & Cov(ph2, ph3) \\ Cov(ph3, ph1) & Cov(ph3, ph2) & Cov(ph3, ph3) \end{pmatrix} \quad [4]$$

From this 3x3 matrix, the eigenvectors can be obtained and normalized.

$$(C - \lambda I) = 0 \Rightarrow PCA = \begin{pmatrix} PCA1x & PCA2x & PCA3x \\ PCA1y & PCA2y & PCA3y \\ PCA1z & PCA2z & PCA3z \end{pmatrix} \quad [5]$$

The obtained eigenvectors are used as the PCA axis's and show in which main directions the data points are mostly concentrated. In FIG. 4, the lines 402, 404, 406 illustrate the PCA axis's. Line 408 indicates the linear regression. As expected, the first PCA axis is oriented along the regression line.

Based on the principal component analysis thus a new axis system orientated along the data point spread out is obtained. When transforming the 3 dimensional coordinates of each data point in the original axis system to the PCA system, we obtain new information. For example, a value of a point on the PCA1 axis or along the regression line. This value can be seen as sort of the mean value between the three basic components, because the regression line represents the bissectrice of the original 3D space. A point with original coordinates (x,y,z) therefore will have a PCA1 value of

$$\left( \frac{x}{\sqrt{3}}, \frac{y}{\sqrt{3}}, \frac{z}{\sqrt{3}} \right) \quad [6]$$

if PCA1 is bissectrice of the original axis system.

The values along the PCA2 and PCA3 axis give an indication of the differences between the three phases. As none of these axis is perpendicular to any plane formed by the original axes it can not be outlined which difference they exactly represent. In general one can say that differences between phase 1 and phase 2 are represented by PCA2 while differences between phase 2 and phase 3 are represented by PCA3.

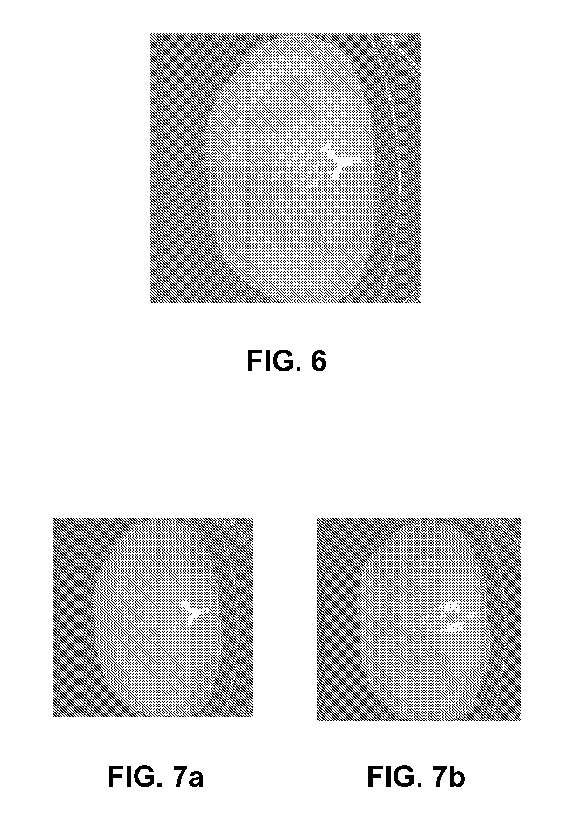

After generation of the image data in the new coordinate system, mapping of the information to a colour space, in the present example being the L*, a*, b* space is performed and then transformation into RGB values is performed. In this way the contrast is enhanced and the available resolution optimally used. In the present example, the PCA1 values are mapped on the luminance channel, i.e. the regression is mapped on the luminance. In this way, every pixel will have a certain light output even if a non zero value only is present in phase 1. By way of example, FIG. 5 illustrates from left to right the three original images from phase 1 (left), to phase 2 (centre), to phase 3 (right). FIG. 6 illustrates the regression mapped on the luminance.

If another axis's value is chosen for the luminance, it might be possible that a pixel contains colour information but no luminance. As this pixel will not light up, the information will be lost. It therefore is advantageous to map the regression on the luminance. The luminance channel in the present example contains too much data and is actually a bad representation of either one of the phases. Therefore, the pixels that are not on the linear regression line are coloured by mapping the PCA2 and PCA3 to the colour axis a* and b*. Two examples of a fused image are given in FIG. 7a and FIG. 7b.

**Example 2**

A second example provides a more detailed illustration of the optional step of mapping information to an antagonist colour space. The present example illustrates the fusion of a CT image and a PET image. In this example, mapping to the antagonist colour space L*, a*, b* is described. The CT image thereby is mapped on the luminance axis L*, whereas the PET image uses both the red-green component axis, a*, and the yellow-blue axis, b*, to map its data points according to a certain colour map. The latter illustrates that for images that do not correlate significantly enough for performing principal component analysis, the images can be assigned to a specific channel in the antagonist colour space.

As in other imaging applications a level and width of the CT image can be controlled. For the PET image a blend function was used that controls the width and the level of the PET image and the level influences the luminance. Although it was mentioned above that PET is mapped on a* and b* components of the colour space, influence of PET on the luminance is necessary to avoid undesired image artefacts. After Window, Level and Blend control (all values in the interval [0,1]) the CT value is :

$$CT' = \frac{CT + (Window - Level).resolution}{2.Window.resolution} \qquad [7]$$

The shape of the PET window is chosen to get a good spread of points for blend values close to one. A particular function PET'for PET value close to zero for low blend values also may be provided. This blend control is based upon one data set so if other data sets differ too much, splitting it up in level and window may be performed. The new CT' and PET' values are mapped in L*a*b* space as follows

$$\begin{bmatrix} L* \\ a* \\ b* \end{bmatrix} = \begin{bmatrix} CT'.100 + Blend.CMap'_L(PET') \\ CMap_a(PET') \\ CMap_b(PET') \end{bmatrix} \qquad [8]$$

The functions $Cmap_a(PET')$ and $Cmap_b(PET')$ return the correct a* respectively b* for the value PET' in a selected colour map. $Cmap'_L(PET')$ is not the original Luminance of the colour map but the corrected one.

From the L*a*b* components the XYZ values are obtained by invers transformation to the XYZ domain and multiplying the normalised $\frac{X}{X_n}, \frac{Y}{Y_n}, \frac{Z}{Z_n}$ with the white point values. If the normalised values are greater than or equal to 0.008856 the transformation formulas are

$$L* = 116\left(\frac{Y}{Y_n}\right)^{\frac{1}{3}} - 16 \rightarrow Y = Y_n\left(\frac{L*+16}{116}\right)^3 \qquad [9]$$

$$a* = 500\left[\left(\frac{X}{X_n}\right)^{\frac{1}{3}} - \left(\frac{Y}{Y_n}\right)^{\frac{1}{3}}\right] \rightarrow X = X_n\left(\frac{a*}{500} + \left(\frac{Y}{Y_n}\right)^{\frac{1}{3}}\right)^3 \qquad [10]$$

$$b* = 200\left[\left(\frac{Y}{Y_n}\right)^{\frac{1}{3}} - \left(\frac{Z}{Z_n}\right)^{\frac{1}{3}}\right] \rightarrow Z = Z_n\left(\left(\frac{Y}{Y_n}\right)^{\frac{1}{3}} - \frac{b*}{200}\right)^3 \qquad [11]$$

If one of the normalised values is smaller than 0.008856, the following terms should be replaced in the above formulas as follows :

$$\left(\frac{X}{X_n}\right)^{\frac{1}{3}} \rightarrow 7{,}787\left(\frac{X}{X_n}\right) + \frac{16}{116} \qquad [12]$$

$$\left(\frac{Y}{Y_n}\right)^{\frac{1}{3}} \rightarrow 7{,}787\left(\frac{Y}{Y_n}\right) + \frac{16}{116} \qquad [13]$$

$$\left(\frac{Z}{Z_n}\right)^{\frac{1}{3}} \rightarrow 7{,}787\left(\frac{Z}{Z_n}\right) + \frac{16}{116} \qquad [14]$$

This means that the transformation formulas become (with, if necessary replacements of the factors on the left hand side)

$$Y = Y_n\left(\frac{L*}{903{,}292}\right) \qquad [15]$$

$$X = \frac{X_n}{7{,}787}\left(\frac{a*}{500} + \left(\frac{Y}{Y_n}\right)^{\frac{1}{3}} - \frac{16}{116}\right) \qquad [16]$$

$$Z = \frac{Z_n}{7{,}787}\left(\left(\frac{Y}{Y_n}\right)^{\frac{1}{3}} - \frac{b*}{200} - \frac{16}{116}\right) \qquad [17]$$

If one wants to represent true colours, the white point ($X_n$, $Y_n$, $Z_n$) of the monitor must be used in the formula. Alternatively, the white point can be calculated by transforming the RGB value [1 1 1] to XYZ. The choice of transformation matrix to go from RGB to XYZ and vice versa depends on the colour space one wants to use. In the next formulae the CIE transformation matrix

$$Q = \begin{bmatrix} 2,3707 & -0,9001 & -0,4706 \\ -0,5139 & 1,4253 & 0,0886 \\ 0,0053 & -0,0147 & 1,0094 \end{bmatrix} \qquad [18]$$

will be used. So the alternative white point is obtained by making the inverse transformation:

$$\begin{bmatrix} X_n \\ Y_n \\ Z_n \end{bmatrix} = \begin{bmatrix} 2,3707 & -0,9001 & -0,4706 \\ -0,5139 & 1,4253 & 0,0886 \\ 0,0053 & -0,0147 & 1,0094 \end{bmatrix}^{-1} \begin{bmatrix} 1 \\ 1 \\ 1 \end{bmatrix} = \begin{bmatrix} 1 \\ 1 \\ 1 \end{bmatrix} \qquad [19]$$

Finally the RGB values of every pixel are calculated from the XYZ values.

$$\begin{bmatrix} R \\ G \\ B \end{bmatrix} = \begin{bmatrix} 2,3707 & -0,9001 & -0,4706 \\ -0,5139 & 1,4253 & 0,0886 \\ 0,0053 & -0,0147 & 1,0094 \end{bmatrix} \begin{bmatrix} X \\ Y \\ Z \end{bmatrix} \qquad [20]$$

The result is a grayscale CT image with a colour content controlled by the PET image.

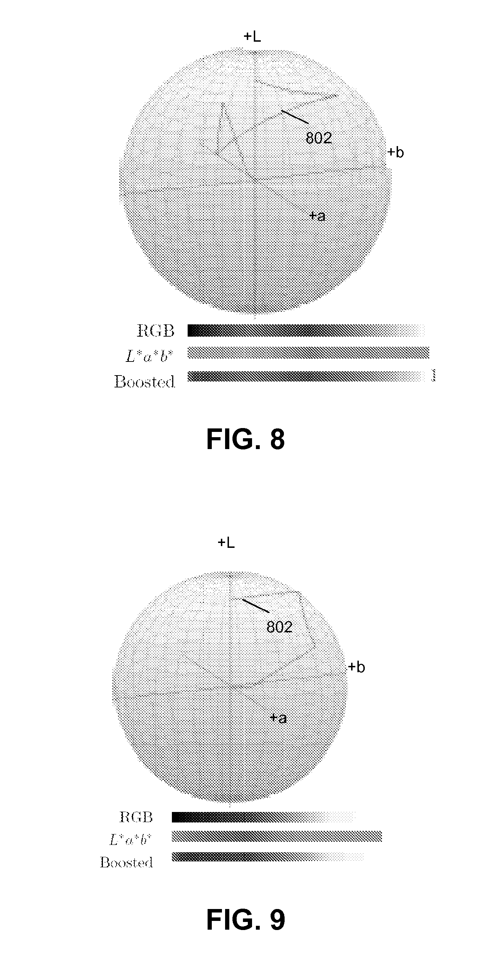

Conformity with existing colour mappings to represent a PET image on a CT image may be maintained by calculating the L*a*b* equivalent of the existing colour maps. A PET value thus is linked to certain L*a*b*. A downside of the transformation to L*a*b* is that the luminance L* is not equal for every colour in the colour map. This means that if (as intended) one only uses a* and b* to represent the PET image, part o the colour map's resolution disappears. In FIG. 8 to FIG. 11, four colour maps are represented in L*a*b* colour space by the line 802. Underneath the globe for every colour map, the colour map is represented in the original RGB, at constant L*a*b* and boosted. The L*a*b* colour bar is made by using only the a* and b* component and at a constant luminance of L* = 70%.

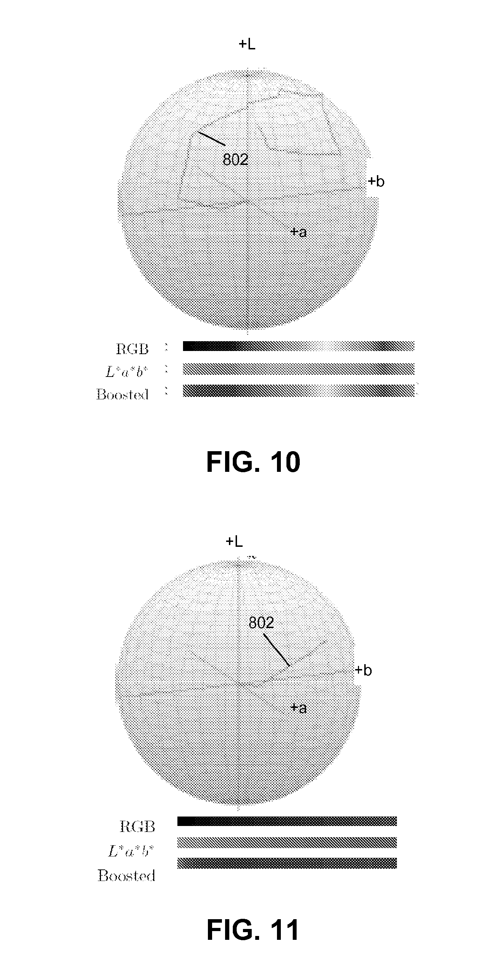

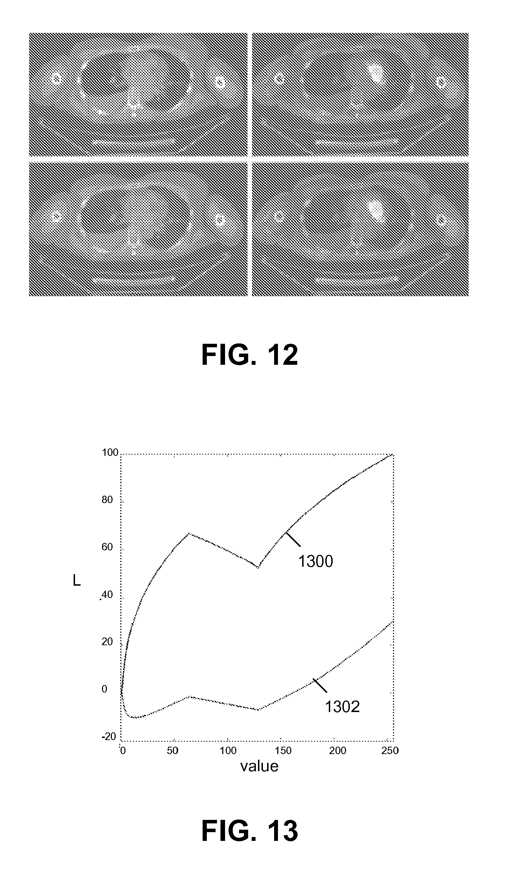

As one can notice, at the end of the colour maps, the representation of the original one is rather bad. This would not be a big problem if it were not that high values in the colour map appear to have the same colour as small values. In some colour maps, for example as in the "Hot Iron" colour map, as shown in FIG. 11, for instance, High PET values appear as a hole in the PET image where the CT is shown perfectly, but there seems to be PET value zero. This problem can e.g. be solved by applying luminance boost. In FIG. 12 an example of the original problem and the boost of luminance is given. In both cases the luminance part is also shown above the fused image. To correct for wrong representation it is suggested to correct luminance L* content of the colour maps. That L*' will be added to the CT luminance depending on how much the PET is blended in, i.e. on the Blend value.

To obtain the corrected L*', the original L* of the colour map is divided in an upper and lower part by a threshold value Th (here we take 70). The lower part will become negative so it will be subtracted from the CT luminance. But for the value zero on the colour map the new L*' should be zero otherwise the CT will be overall dimmed if the Blend increases for every PET value that is zero. This is why an exponential drop close to zero is included.

$$LowPart = (L* - Th)\left(1 - e^{\frac{-L*}{100}}\right) \text{ only for } L* < 70 \qquad [21]$$

The higher end of the colour map is boosted by a linear combination of the original L* value

$$HighPart = (L*-Th)\left(\frac{L*}{100}\right)^2 \text{ only for } L* > 70 \qquad [22]$$

In drawings 13 to 16 the original luminance L* is represented by the black line 1300 and L*' by the red curve (1302).

$$L*' = LowPart + HighPart \qquad [23]$$

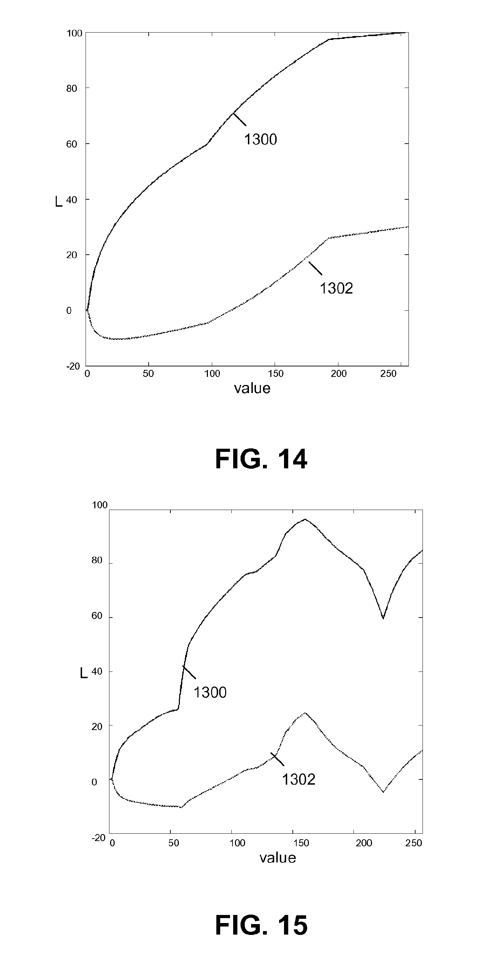

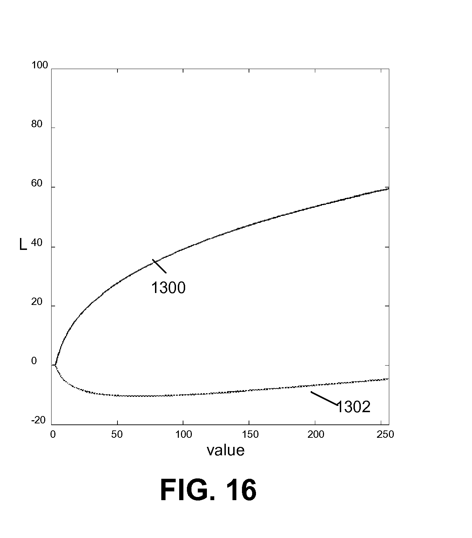

The downside on boosting the luminance is that luminance, and thus CT' image is being altered. Points witch have a low luminance (CT' value) and low (but not zero) PET' can be clipped to zero by the boost principle. These pixels disappear. On the other end of the scale saturation might take place for pixels with a luminance close to the maximum. So pixels with grayscales close to white witch have high PET' values will all be white. The influence of the boosted luminance L*' also linearly depends on the Blend value. This means that if Blend=0 the original CT' image remains untouched. If Blend=1 the luminance of every pixel is boosted depending on the PET' value of that pixel. The boost amount (at Blend=1) for each value can be found in FIG. 13 to FIG. 16 represented by line 1302. At this point clipping and saturation is at a maximum.

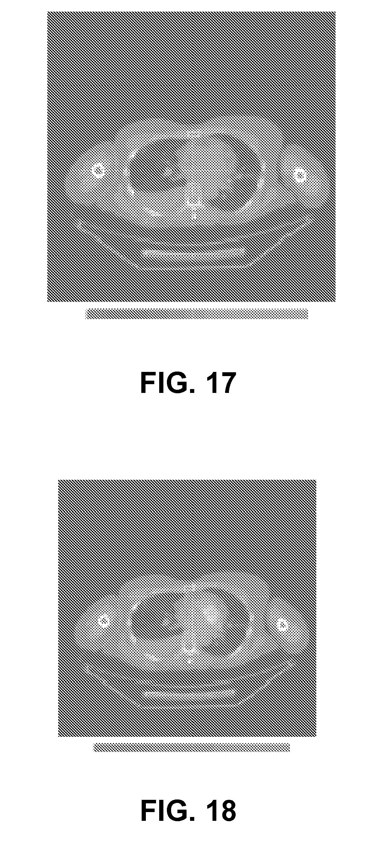

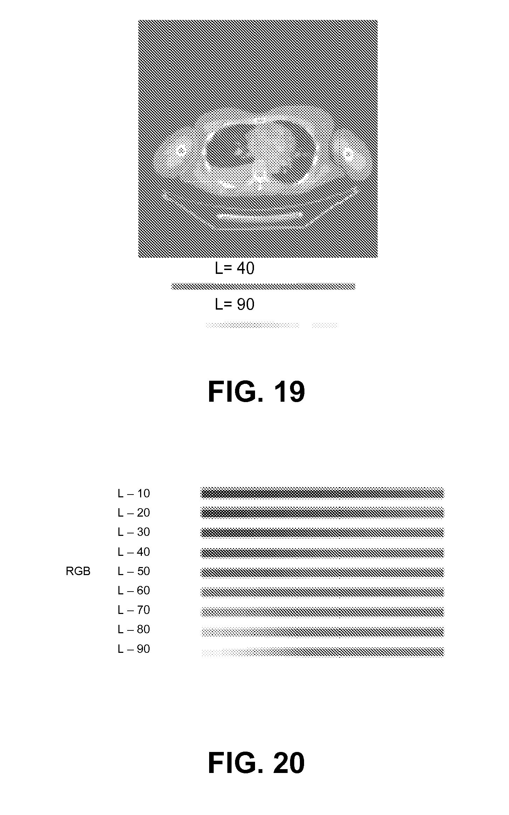

Other colour representations also may be used. If the PET image could be mapped on the a* and b* dimension of the L*a*b* space there would no longer be a problem with the luminance. In this context one can still chose to map the PET on the positive, negative or entire axis. Also more complex combinations of a* and b* as colour map are possible. The result of a few of those mappings are represented in FIG. 17 to FIG. 19. The problem with such colour maps may be the clipping that happens when transforming from XYZ to RGB. Another downside is that the gray of the CT may possibly be coloured by choice of the colour map. The problem with this kind of representation (for instance using the positive part of the a* axis) is that the colour map depends on the luminance of the pixel. This can be seen in FIG. 20. where the positive a* axis is used to map the PET while the luminance varies from 10 to 90. This problem is mainly due to the clipping that is unavoidable when going from XYZ to RGB.

The present example illustrates that the different medical images can be independently controlled and that a clear, high contrast image can be obtained. It is an advantage of embodiments of the present invention that the different components can be clearly distinguished.

The second particular example provides the example of fusion of a PET image and a CT image, the PET image providing functional information whereas the CT image provides anatomical information.

**Example 3**

A third example illustrates the example wherein there are multiple registered datasets that reflect an evolution over time, e.g. a three phase liver study and wherein a moving window technique is used. The new coordinate system thereby does not need to be based on PCA, but may be based thereon. In one example, the new coordinate system is based on visualisation of differences over time. For a three dimensional dataset DS(1), DS(2), DS(3), ... a new coordinate system may be such that the new coordinate1 equals the original coordinate of the N'th dataset, the new coordinate2 equals the difference between the original coordinate1 of the N'th dataset and original coordinate1 of the N-1st dataset, new coordinate3 is an average of original coordinate of the Nth, the N-1st and N-2nd dataset minus the original coordinate of the N-3rd dataset. It is to be noticed that this technique also can be applied to a single dataset, e.g. a single CT dataset, whereby the "N medical images" are individual slices out of that dataset. The example illustrates that the coordinate system does not necessarily needs to be defined by PCA. It can be decided to take for example one axis as the "current image", one axis as "the difference between current and previous image" and another axis as "the long-term response". Other axis also can be selected, such as for example an axis representing a function of some components of the original data. The coordinate system also may be determined or chosen based on physical or physiological reasons. If for example one wants to study a particular phenomenon of the body, and we know how the CT values of the image will change when the phenomenon occurs, then we can define one axis that is mapped on this phenomenon.

In similar way, an example of this technique is provided being a non-linear combination of multiple medical images. For a normal CT sequence for instance at a certain slice x position the components could be:

$$Comp1 = CT(x) + 0.2*(CT(x-1) + CT(x) + CT(x+1))/3 \qquad [24]$$

$$Comp2 = \exp(CT(x-1) / res) \qquad\qquad [25]$$

$$Comp3 = CT(x+1) \qquad\qquad [26]$$

In this example the first component could be mapped to the L axis so every pixel that has information has at least some luminance. The second and third could be mapped to a* and b*. This results in a blue overlay on the global image representing the slice that is to come and the red overlay represents the accents of the previous image. This example illustrates the applicability of the principle and shows that it is not restricted to linear combinations of the images as was done in PCA.

It is to be understood that although preferred embodiments, specific constructions and configurations, as well as materials, have been discussed herein for devices according to the present invention, various changes or modifications in form and detail may be made without departing from the scope and spirit of this invention.

**Claims**

1. A method (100) for processing a plurality of medical images, the method comprising using (130) a new coordinate system for representing combined image data of said plurality of medical images based on correlation information between image data of a plurality of medical images.

2. A method (100) according to claim 1, wherein the processing of medical images comprises fusion of medical images.

3. A method (100) according to any of the previous claims, the method comprising obtaining (110) a plurality of medical images.

4. A method according to claim 3, wherein said obtaining comprises registering the plurality of medical images on top of each other.

5. A method (100) according to any of the previous claims, the method comprising extracting (120) correlation information from image data of a plurality of medical images and using said correlation information for generating a new coordinate system.

6. A method (100) according to claim 5, wherein extracting (120) correlation information comprises applying (122) principal component analysis.

7. A method (100) according to any of claims 5 or 6, said plurality of medical images comprising N medical images, wherein extracting (120) correlation information comprises

   - representing (124) image data for each pixel of said N medical images in an intermediate N-dimensional coordinate system by using, for each pixel, the image value in the j-th medical image as j-th coordinate of a data set for the intermediate N-dimensional coordinate system for said pixel, and
   - deriving (126) correlation information from a covariance matrix for said data in said intermediate N-dimensional coordinate system.

8. A method (100) according to claim 7, wherein extracting (120) correlation information comprises deriving (126) eigenvectors for said covariance matrix in the intermediate coordinate system, and wherein generating (130) a new coordinate system comprises using said eigenvectors as coordinate axis of said new coordination system, thus defining the new coordinate system.

9. A method (100) according to claim 8, the method further comprising

   - performing (140) a transformation of the represented image data points in the intermediate coordinate system to the new coordinate system.

**10.** A method (100) according to any of the previous claims, wherein the plurality of medical images consists of N medical images, the number of medical images N being at least 2 and less than 6.

**11.** A method (100) according to any of the previous claims, wherein the medical images comprise at least one positron emission tomography image and at least one computed tomography image.

**12.** A method (100) according to any of the previous claims, wherein the medical images comprise different phases of a computed tomography scan.

**13.** A method (100) for image processing according to any of the previous claim, the method furthermore comprising mapping (150) image data of the plurality of medical images in an antagonist colour space.

**14.** A method (100) according to claim 13, wherein mapping (150) image data of the plurality of medical images in an antogonist colour space comprises mapping image data of the plurality of medical images in the L*, a*, b* colour space.

**15.** A method (100) according to any of claims 13 to 14, wherein first image data is mapped to a luminance component of the antagonist colour space, whereas second image data is mapped to other components of the colour space.

**16.** A method (100) according to any of claims 13 to 15, the method comprising transforming (160) image data in the antagonist colour space to a different colour representation taking into account the white point of the display, for visualising the image data on a display.

**17.** A method (100) according to any of claims 13 to 16 in as far as dependent on claim 9, wherein mapping image data of the plurality of medical images in an antagonist colour space coordinate comprises mapping the combined image data from the new coordinate system to the antagonist colour space.

**18.** A method (100) according to claim 17, wherein a luminance component of the colour space is used for imaging the image data that is the same for the plurality of medical images, whereas at least one colour contrast component of the colour space is used for representing differences between imaged data in different medical images.

**19.** An image processing system (200) for processing medical images, the processing system being adapted for using (130) a new coordinate system for representing combined image data of said plurality of medical images based on correlation information between image data of a plurality of medical images.

**20.** An image processing system (200) according to claim 19, the image processing system comprising

- extraction means (202) for extracting said correlation information from a plurality of medical images, and
- generating means (204) for generating said new coordinate system for representing combined information of said plurality of medical images based on said correlation information.

**21.** An image processing system (200) according to any of claims 19 to 20, the system further comprising a

transformation means (208) for transforming image data of the plurality of medical images to the new coordinate system.

**22.** An image processing system (200) according to any of claims 19 to 21, wherein the system further comprises a mapping means (210) for mapping image data of the plurality of medical images from the new coordinate system to the a colour space having a separate luminance coordinate.

**23.** An image processing system (200) according to any of claims 19 to 22, the system comprising the functionality of performing a method according to any of claims 1 to 18.

**24.** A medical imaging system adapted for recording a plurality of medical images, the medical imaging system comprising an image processing system according to any of claims 19 to 23.

**25.** A computer program product adapted for, when executed on a computing device, performing a method for processing medical images according to any of claims 1 to 18.

**26.** A machine readable data storage device storing the computer program product of claim 25.

**27.** Transmission of the computer program product of claim 25, over a local or wide area telecommunications network.

**28.** Digital or analog images produced using any of the methods of claims 1 to 18.

FIG. 1a

100

Obtaining different medical images of an object

Registering the medical images

112

110

Using a new coordinate system based on correlation
information between image data of
the plurality of medical images

130

Perform coordinate transformation from intermediate
coordinate system to new coordinate system

140

Map combined image data in new coordinate system to
antagonist colour space

150

Transform image data in antagonist colour
space to X, Y, Z values

160

Transform X, Y, Z values to
R, G, B values

170

**FIG. 1b**

**FIG. 2**

**FIG. 3**

**FIG. 4**

**FIG. 5**

**FIG. 6**

**FIG. 7a**

**FIG. 7b**

+L

+b

802

+a

RGB

$L^* a^* b^*$

Boosted

**FIG. 8**

+L

802

+b

+a

RGB

$L^* a^* b^*$

Boosted

**FIG. 9**

+L

802

+b

+a

RGB :

$L^*a^*b^*$ :

Boosted :

# FIG. 10

+L

802

+b

+a

RGB

$L^*a^*b^*$

Boosted

# FIG. 11

FIG. 12

FIG. 13

**FIG. 14**

**FIG. 15**

**FIG. 16**

**FIG. 17**

**FIG. 18**

L= 40

L= 90

**FIG. 19**

RGB   L – 10
      L – 20
      L – 30
      L – 40
      L – 50
      L – 60
      L – 70
      L – 80
      L – 90

**FIG. 20**

**European Patent Office**

**EUROPEAN SEARCH REPORT**

Application Number

EP 07 12 1471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHMIEDL ET. AL.: "The utility of Principal Component Analysis for the Image Display of Brain Lesions. A Preliminary, Comparative Study" MAGNETIC RESONANCE IN MEDICINE, vol. 4, 1987, pages 471-486, XP002480034 | 1-10, 19-21, 23-26,28 | INV. G06T5/50 |
| Y | * page 472 - page 480 *<br><br>* page 484 - page 485 *<br>----- | 11-18, 22,27 | |
| Y | AGUILAR M ET AL: "Fusion of multi-modality volumetric medical imagery" INFORMATION FUSION, 2002. PROCEEDINGS OF THE FIFTH INTERNATIONAL CONFE RENCE ON JULY 8-11, 2002, PISCATAWAY, NJ, USA,IEEE, vol. 2, 8 July 2002 (2002-07-08), pages 1206-1212, XP010594330 ISBN: 978-0-9721844-1-0 * page 1206, column 2, lines 4-7, paragraph 3 * * page 1208, column 2, paragraph 2 * * page 1209, column 1, line 12 - line 14, paragraph 1 *<br>----- | 11-18, 22,27 | |
| X | PEDERSEN, BERGSTROM, BENGTSSON, LANGSTROM: "Principal Component Analysis of dynamic positron emission tomography images" EUROPEAN JOURNAL OF NUCLEAR MEDICINE, 1994, XP009100069 * page 1291 - page 1292 *<br>----- | 1-10, 19-21, 23-26,28 | TECHNICAL FIELDS SEARCHED (IPC)<br><br>G06T<br>H04N |
| X | GONZALEZ, WOODS: "Digital Image Processing, second edition" 2002, ADDISON WESLEY , NEW JERSEY , XP002479232 * page 675 - page 683, paragraph 3.6 * | 1-10 | |
| A | * page 322 - page 323 *<br>----- | 14 | |
| | -/-- | | |

The present search report has been drawn up for all claims

| Place of search | Date of completion of the search | Examiner |
|---|---|---|
| Munich | 27 May 2008 | Katsoulas, Dimitrios |

EPO FORM 1503 03.82 (P04C01)

European Patent
Office

**EUROPEAN SEARCH REPORT**

Application Number

EP 07 12 1471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KARL G. BAUM, MARIA HELGUERA, ANDRZEJ KROL: "Fusion Viewer: A New Tool for Fusion and Visualization of Multimodal Medical Data Sets" JOURNAL OF DIGITAL IMAGING, October 2007 (2007-10), pages 1-10, XP002480040 * page 5 - page 7 * | 13-16 | |
| A | MARQUEZ ET. AL.: "Image- Fusion Operators for 3D Anatomical and Functional Analysis of the Brain" PROCEEDINGS OF THE 29TH ANNUAL INTERNATIONAL CONFERENCE OF THE IEEE EMBS, August 2007 (2007-08), XP002480041 * page 834 - page 835 * | 1-28 | |
| A | TWELLMANN ET AL.: "Image Fusion for Dynamic Contrast Enhanced Magnetic Resonance Imaging" BIOMEDICAL ENGINEERING ONLINE, October 2004 (2004-10), pages 1-21, XP002480042 * page 3 - page 5 * | 1-28 | TECHNICAL FIELDS SEARCHED (IPC) |
| A | DI-YUAN TZENG, ROY S. BERNS: "A Review of Principal Component Analysis and Its Applications to Color Technology" COLOR RESEARCH AND APPLICATION, 2005, XP002480043 * page 86 - page 88 * | 1-28 | |

The present search report has been drawn up for all claims

| Place of search | Date of completion of the search | Examiner |
|---|---|---|
| Munich | 27 May 2008 | Katsoulas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Linear and nonlinear ICA based on mutual information : the MISEP method, signal processing archive,* 2004, vol. 84, ISSN 0165-1684, 231-245